# FASCICULE DE BREVET EUROPEEN

(11) **EP 2 285 621 B1**
(45) Date de publication et mention de la délivrance du brevet: **30.11.2011**
(21) Numéro de dépôt: 09761921.7
(22) Date de dépôt: 20.05.2009
(51) Int. Cl.: B60R 5/04

(54) **AGENCEMENT D'UN COFFRE DE VEHICULE AUTOMOBILE ET VEHICULE AUTOMOBILE COMPORTANT UN TEL AGENCEMENT**
ANORDNUNG FÜR EIN AUTOMOBILHECK UND AUTOMOBIL MIT EINER SOLCHEN ANORDNUNG
ARRANGEMENT FOR AN AUTOMOBILE TRUNK AND AUTOMOBILE INCLUDING SUCH AN ARRANGEMENT

(30) Priorité: 20.05.2008 FR 0853262
(43) Date de publication de la demande: 23.02.2011
(73) Titulaire: Magna Stery France SAS, 91570 Bievres (FR)
(72) Inventeur: PENCEY, Charly, F-25750 Aibre (FR); DORDET, Patrick, F-72650 La Chapelle Saint Aubin (FR); SOBA, Emile, F-75005 Paris (FR)
(74) Mandataire: Blot, Philippe Robert Emile
(86) Numéro de dépôt international: PCT/FR2009/050937
(87) Numéro de publication internationale: WO 2009/150370

(56) Documents cités:
- WO-A-03/080394
- WO-A-2007/143874
- FR-A- 2 897 806
- US-A- 5 931 527

## Description

L'invention concerne un agencement d'un coffre pour véhicule automobile, ledit coffre étant délimité par un plancher, deux parois latérales et une cloison de séparation avec l'habitacle, et comprenant un plateau formant un faux plancher, associé à des moyens de translation du plateau entre plusieurs positions sensiblement horizontales, variables en hauteur pour fractionner le coffre en deux compartiments de chargement séparés, lesdits moyens de translation comprenant, sur chaque bord latéral du plateau, un premier dispositif comportant un premier pignon engagé dans une première crémaillère.

L'invention concerne également un véhicule automobile comportant un tel agencement de coffre.

Les véhicules automobiles comportent un compartiment de coffre délimité, dans sa partie inférieure par un plancher, latéralement par deux parois, à l'avant par une cloison transversale de séparation avec l'habitacle généralement réalisée par l'arrière des sièges, et à l'arrière par un panneau de coffre ou un haillon.

La diversité des objets à transporter et à ranger dans un coffre de véhicule automobile, ainsi que les différents usages de ces objets, amènent les constructeurs à proposer des solutions de rangement ou de séparation du volume du coffre en plusieurs compartiments.

Un agencement de coffre du type précité est décrit dans la demande de brevet FR 2 897 806. Cet agencement permet de subdiviser l'espace du coffre au moyen d'un plateau formant un faux plancher, associé à des moyens de translation du plateau entre plusieurs positions sensiblement horizontales et variables en hauteur. Les moyens de translation comprennent, sur chaque bord latéral du plateau, un système à pignon crémaillère.

Toutefois, lors de la translation du plateau entre deux positions horizontales, le pignon gauche et le pignon droit des moyens de translation ont des vitesses angulaires différentes, impliquant un écart angulaire entre le pignon gauche et le pignon droit. Cet écart angulaire entraîne une inclinaison latérale du plateau s'opposant au mouvement de translation, ce qui engendre un maniement peu aisé du plateau de cet agencement, et même dans certains cas un coincement du plateau.

L'invention a donc pour but de proposer un agencement d'un coffre, notamment pour véhicule automobile, qui évite cet inconvénient et réduise l'inclinaison latérale du plateau lors de sa translation entre deux positions horizontales, afin de faciliter le maniement du plateau.

A cet effet, l'invention a pour objet un agencement de coffre du type précité, caractérisé en ce que les moyens de translation comprennent, sur chaque bord latéral du plateau, un deuxième dispositif comportant un deuxième pignon engagé dans une deuxième crémaillère, l'axe du deuxième pignon étant sensiblement parallèle à l'axe du premier pignon, et en ce que le deuxième pignon d'un bord latéral est maintenu solidairement en rotation avec le deuxième pignon de l'autre bord latéral par une barre de synchronisation.

Suivant d'autres modes de réalisation, l'agencement comprend une ou plusieurs des caractéristiques suivantes, prises isolément ou suivant toutes les combinaisons techniquement possibles :
- des moyens de guidage et de blocage du plateau dans l'une des positions horizontales,
- les moyens de blocage sont agencés sur chaque bord latéral du plateau (10), et les moyens de blocage d'un bord latéral sont reliés aux moyens de blocage de l'autre bord latéral par une traverse,
- des éléments de maintien de la partie médiane de chaque bord latéral du plateau dans chacune desdites positions horizontales,
- lesdits éléments de maintien sont réalisés en un matériau élastique, de préférence en élastomère,
- lesdits éléments de maintien comprennent, pour chaque bord latéral du plateau, un premier élément fixé au bord latéral correspondant du plateau et un deuxième élément fixé à la paroi latérale du coffre en regard dudit bord latéral correspondant, le premier élément et le deuxième élément étant propres à permettre un centrage automatique de l'un par rapport à l'autre,
- des éléments de support de la partie arrière de chaque bord latéral du plateau dans chacune desdites positions horizontales,
- une articulation du plateau entre chaque position horizontale et une position sensiblement verticale,
- des éléments amovibles de retenue du plateau en position sensiblement verticale,
- la première crémaillère de chaque premier dispositif est ménagée sur la face interne d'une branche latérale d'un profilé desdits moyens de translation, en forme de "U" dont l'ouverture est dirigée vers l'intérieur du véhicule, la deuxième crémaillère de chaque deuxième dispositif est ménagée sur la face interne de l'autre branche latérale du profilé,
- les moyens de guidage du plateau comprennent, sur chaque bord latéral du plateau, un chariot déplaçable par coulissement du premier pignon sur le profilé correspondant, ledit chariot étant solidaire en translation du plateau par l'intermédiaire des moyens de blocage et de la barre de synchronisation,
- une extrémité de l'axe du premier pignon est solidaire du chariot, et l'autre extrémité de l'axe du premier pignon débouche dans orifice prévu dans une paroi latérale dudit premier pignon,
- des moyens d'assistance du déplacement du premier pignon sur la première crémaillère vers le haut et vers le bas,
- les moyens d'assistance du déplacement du premier pignon comprennent un ressort à spirales précontraint et de raideur constante, logé dans le premier pignon, l'extrémité distale du ressort étant reliée au premier pignon et l'extrémité proximale étant reliée aux moyens de guidage,
- les moyens de blocage du plateau comprennent, sur chaque bord latéral du plateau, un doigt porté par le plateau et traversant les moyens de guidage par un manchon, ledit doigt étant déplaçable par des moyens de commande entre une position escamotée pour le déplacement du plateau entre lesdites positions horizontales, et une position de verrouillage du plateau dans l'une de ces positions horizontales, dans lesquelles il coopère avec un orifice ménagé dans l'âme du profilé correspondant,
- le plateau comporte un volet amovible de maintien de chaque doigt en position escamotée, propre à faciliter l'assemblage du plateau et des moyens de blocage,
- les moyens de blocage du plateau sont disposés à proximité de la partie avant de chaque bord latéral du plateau,
- le plateau comporte une ligne de pliage s'étendant sensiblement transversalement dans la partie médiane du plateau, et propre à permettre une absorption d'énergie par le plateau en cas de choc arrière, le plateau étant maintenu en partie avant par les moyens de blocage et étant destiné à se plier le long de ladite ligne de pliage,
- des moyens fusibles de maintien de la barre de synchronisation en position angulaire autour de son axe, propres à faciliter l'assemblage de la barre de synchronisation avec chaque deuxième pignon,
- un jeu compatible avec le déplacement du plateau est ménagé, d'une part, entre le doigt et le manchon et, d'autre part, entre l'excroissance du goujon et la rainure.

L'invention a également pour objet un véhicule automobile caractérisé en ce qu'il comporte un agencement de coffre tel que précédemment défini.

L'invention et ses avantages seront mieux compris à la lecture de la description qui va suivre, donnée uniquement à titre d'exemple, faite en référence aux dessins annexés, sur lesquels :
- la figure 1 est une vue schématique en coupe longitudinale de la partie arrière d'un véhicule automobile comportant un agencement de coffre selon l'invention,
- la figure 2 est une vue en perspective d'un plateau formant un faux plancher et d'une paroi latérale droite dans un agencement de coffre selon l'invention,
- la figure 3 est une vue en perspective du plateau et d'un profilé droit dans l'agencement de coffre selon l'invention,
- la figure 4 est une vue en perspective éclatée de la figure 2,
- la figure 5 est un agrandissement de la zone encerclée V de la figure 4,
- la figure 6 est une vue en perspective à plus grande échelle d'un pignon et d'une barre de synchronisation des moyens de translation du plateau à proximité du sommet avant droit du plateau,
- la figure 7 est une vue partielle et en perspective à plus grande échelle de moyens de guidage et de blocage du plateau sur son bord latéral droit, avant l'assemblage du plateau avec les moyens de guidage et de blocage, dans l'agencement de coffre selon l'invention, et
- la figure 8 est une vue analogue à celle de la figure 7, après l'assemblage du plateau avec les moyens de guidage et de blocage.

Dans la suite de la description, les termes « avant », « arrière », « droite », « gauche », « haut », « bas », « longitudinal », « transversal » et « vertical » s'entendent par référence au système d'axes orthogonal usuel des véhicules automobiles, représenté sur les figures et possédant :
- un axe longitudinal X dirigé de l'arrière vers l'avant ;
- un axe transversal Y dirigé de la droite vers la gauche ; et
- un axe vertical Z, dirigé du bas vers le haut.

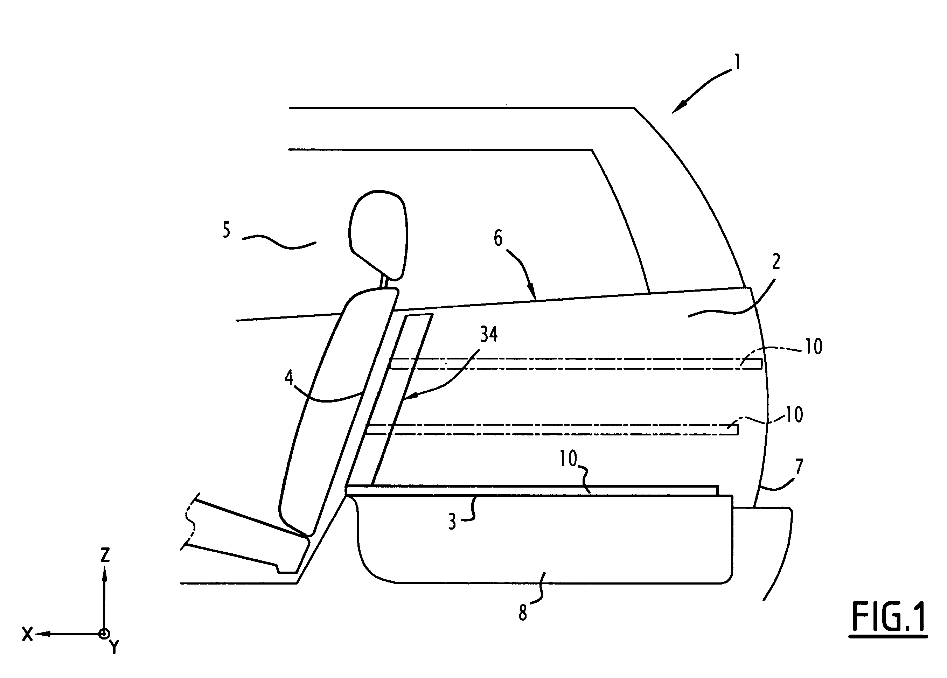

Sur la figure 1, on a représenté schématiquement une partie arrière d'un véhicule automobile désignée dans son ensemble par la référence 1, et qui comporte, de manière classique, un coffre 2 délimité, dans sa partie inférieure par un plancher 3, à l'avant par le dos 4 d'une rangée de sièges arrière séparant le coffre 2 avec un habitacle 5 et, latéralement par des parois latérales 6.

Le coffre 2 est également délimité à l'arrière par un couvercle de coffre, qui dans l'exemple de réalisation de la figure 1 est constitué par un haillon 7.

Le coffre 2 comporte, à sa partie inférieure, un logement 8 pour une roue de secours, non représentée.

Afin de diviser le coffre 2 en plusieurs compartiments distincts, ce coffre 2 est agencé selon l'invention et comporte un plateau 10 formant un faux plancher déplaçable entre plusieurs positions horizontales. Dans l'exemple de réalisation de la figure 1, le plateau 10 est déplaçable entre trois positions horizontales distinctes, la position basse étant représentée en traits pleins, et les positions intermédiaire et haute étant représentées en traits mixtes.

Le plateau 10 permet ainsi de diviser l'espace de rangement du coffre 2, par exemple en deux espaces de rangements superposés.

Le plateau 10 est délimité de chaque côté par un bord latéral 11 gauche et un bord latéral 11 droit, à l'arrière par un bord arrière 12 et à l'avant par un bord avant 13. Le bord avant 13 du plateau est rigidifié par une traverse 14 s'étendant sensiblement sur toute la longueur du plateau 10 selon la direction transversale.

Le plateau 10 est muni de quatre anneaux 15 d'arrimage fixés à proximité des quatre sommets du plateau par des moyens de fixation, tels que des rivets.

Le plateau 10 est réalisé, par exemple, en une structure composite sandwich en nid d'abeilles, recouverte d'un revêtement 16 d'aspect. Le plateau 10 est propre à supporter une charge de l'ordre de 100 kg uniformément répartie sur l'aire totale du plateau.

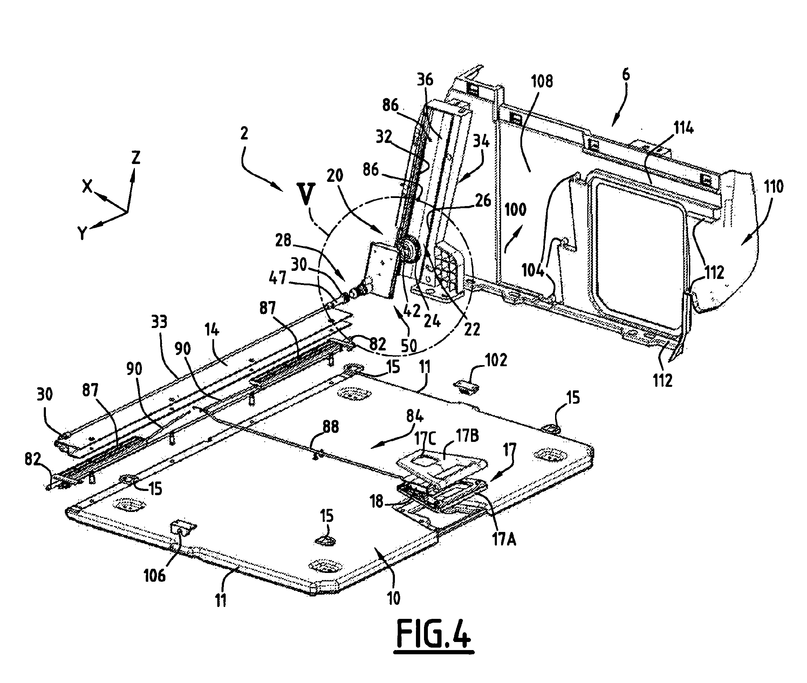

Le plateau 10 comprend, à proximité de la partie médiane de son bord arrière 12, une poignée 17 de maniement du plateau. La poignée 17 comporte deux demi-coques 17A, 17B, visibles sur la figure 4. La demi-coque 17A inférieure est fixée à la demi-coque 17B supérieure par des moyens de fixation, non représentés, tels que des vis. La poignée 17 est munie d'une gâchette 18 logée dans une partie en creux de la partie avant de la demi-coque 17A inférieure, et accessible à travers une ouverture 17C ménagée dans la partie avant de la demi-coque 17B supérieure.

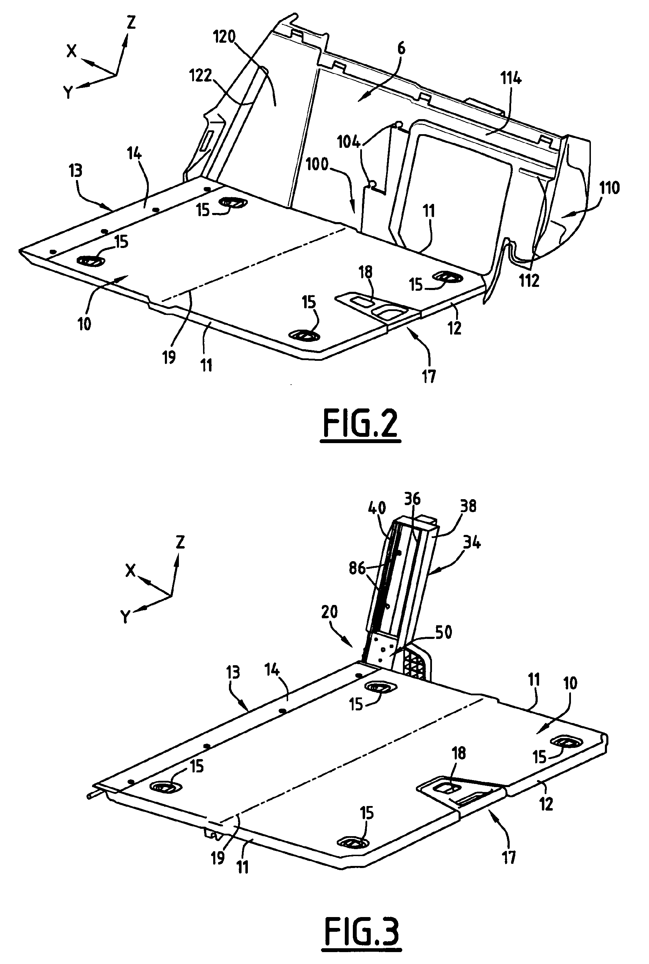

Le plateau 10 comporte une ligne 19 de pliage, dont l'emplacement est représenté par des traits mixtes sur la figure 2, s'étendant sensiblement transversalement dans la partie médiane du plateau 10. La ligne 19 de pliage est réalisée à l'intérieur du plateau 10 dans sa structure composite sandwich en nid d'abeilles. La ligne 19 de pliage est propre à permettre une absorption d'énergie par le plateau 10 en cas de choc arrière, le plateau 10 étant maintenu en partie avant et étant destiné à se plier le long de la ligne 19 de pliage.

Le plateau 10 est associé à des moyens 20 de translation, visibles sur les figures 3 à 5, propres à permettre le déplacement du plateau 10 entre ses différentes positions horizontales, variables en hauteur pour fractionner le coffre en deux compartiments de chargement séparés.

Les figures 3 à 5 sont des vues partielles où la paroi latérale gauche du coffre et les moyens de translation sur le bord latéral gauche du plateau n'ont par exemple pas été représentés, afin de faciliter la compréhension. L'agencement du coffre 2 étant symétrique par rapport à un plan médian vertical contenant la direction longitudinale, la description de la partie gauche de l'agencement se déduit directement de la description de la partie droite de l'agencement qui va suivre.

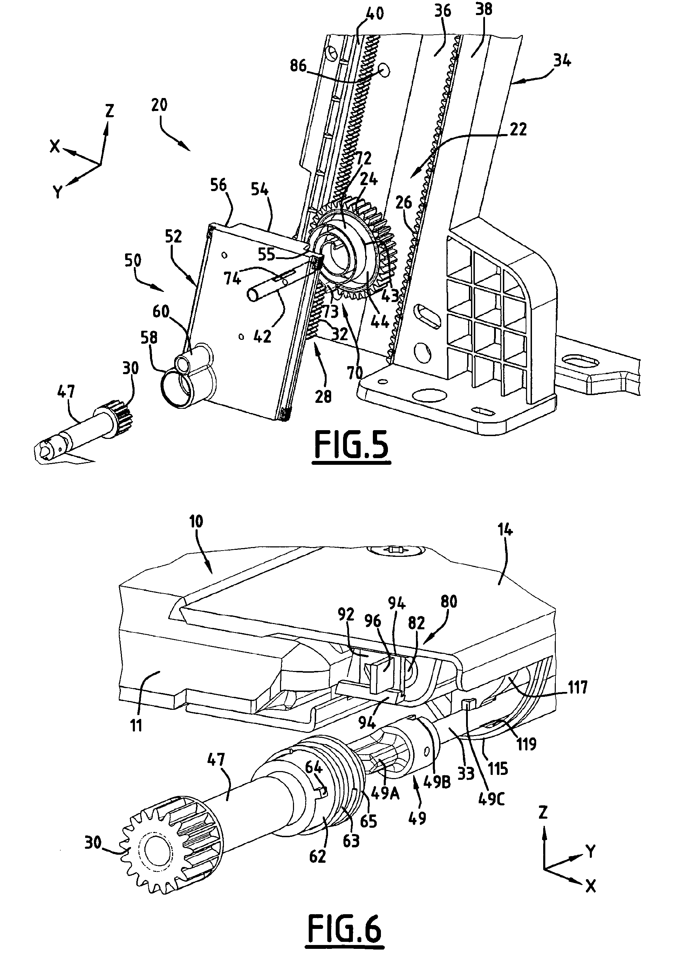

Les moyens 20 de translation comprennent, sur chaque bord latéral 11 du plateau, un premier dispositif 22 comportant un premier pignon 24 engagé dans une première crémaillère 26 et un deuxième dispositif 28 comportant un deuxième pignon 30 engagé dans une deuxième crémaillère 32, comme représenté sur la figure 5. Le deuxième pignon 30 gauche est maintenu solidairement en rotation avec le deuxième pignon 30 droit par une barre 33 de synchronisation, visible sur la figure 4. La barre 33 de synchronisation s'étend sensiblement sur toute la longueur du plateau 10 selon la direction transversale.

Les moyens 20 de translation comprennent également deux profilés 34, chaque profilé 34 étant fixé dans sa partie inférieure sur le plancher 3, et sur le côté sur une paroi latérale 6.

Chaque profilé 34, visible sur la figure 5, est de section transversale en forme de « U » ouverte vers l'intérieur du véhicule automobile. Chaque profilé 34 comporte une âme 36, une branche latérale arrière 38 et une branche latérale avant 40. Chaque profilé 34 s'étend dans un plan vertical selon la direction longitudinale, et est incliné de bas en haut vers l'arrière du véhicule.

La première crémaillère 26 est ménagée sur la face interne de la branche latérale arrière 38 et la deuxième crémaillère 32 est ménagée sur la face interne de la branche latérale avant 40. Le premier pignon 24 et le deuxième pignon 30 sont placés dans le logement formé par le profilé 34, et s'engrènent respectivement avec la première crémaillère 26 et la deuxième crémaillère 32.

Le premier pignon 24 est porté par les moyens de guidage 50, ainsi qu'on le verra ultérieurement.

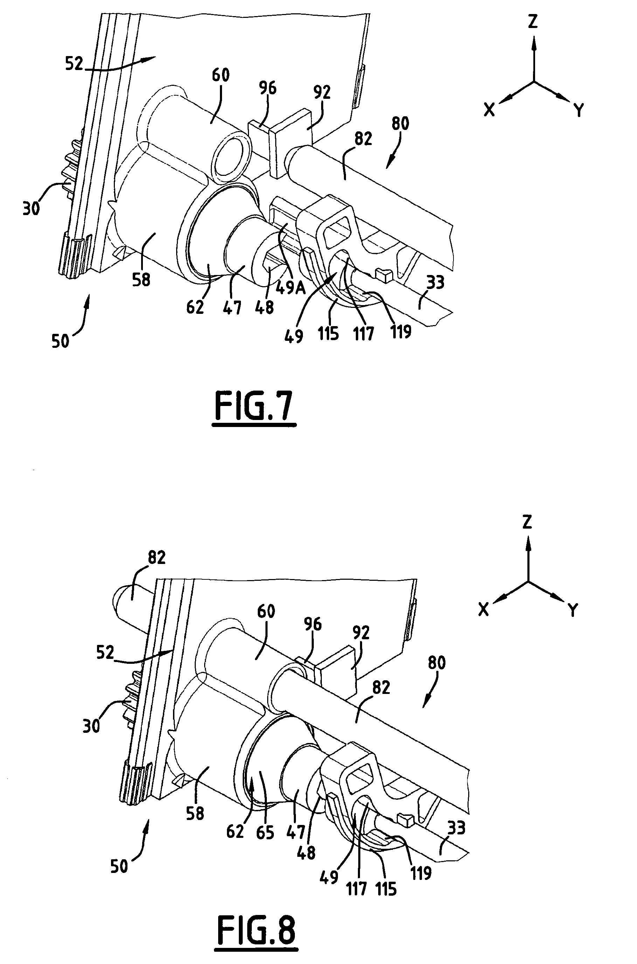

Le deuxième pignon 30 est porté par un deuxième axe 47 horizontal. Le deuxième axe 47 est, à une extrémité, fixé solidairement au deuxième pignon 30, comme représenté sur la figure 6. Le deuxième axe 47 présente à son autre extrémité une rainure 48 de réception d'un goujon 49 de la barre 33 de synchronisation, comme représenté sur la figure 7. Le deuxième axe 47 s'étend du côté du deuxième pignon 30 opposé à l'âme 36 du profilé, vers le plateau 10. Le deuxième axe 47 est, par exemple, venu de matière avec le deuxième pignon 30.

La rainure 48 et le goujon 49 sont propres à assurer la liaison en rotation de la barre 33 de synchronisation du deuxième pignon 30 correspondant.

Le goujon 49, visible sur la figure 6, est fixé en chaque extrémité de la barre 33 de synchronisation et solidairement de cette dernière. Le goujon 49 présente à une extrémité une excroissance 49A complémentaire de la rainure 48, et à son autre extrémité une fente 49B de réception d'un ergot fusible 49C de la barre 33 de synchronisation.

Un jeu compatible avec le fonctionnement est ménagé entre l'excroissance 49A et la rainure 48.

L'ergot fusible 49C est destiné à fixer l'orientation de l'excroissance 49A du goujon, lors du montage initial du plateau 10 avec les moyens 20 de translation, et plus particulièrement de la barre 33 de synchronisation avec chaque deuxième pignon 30.

Le coffre comporte également des moyens 50 de guidage du plateau 10 au cours de son déplacement.

Les moyens 50 de guidage du plateau comprennent, sur chaque bord latéral 11 du plateau, un chariot 52 destiné à coulisser sur le profilé 34 lors de la rotation du premier pignon 24, c'est-à-dire lors du déplacement de ce premier pignon 24 sur la première crémaillère 26. Les bords 54 de la face externe du chariot 52, dirigés vers l'extérieur du véhicule, présentent un profil complémentaire au profil interne du profilé 34. Lesdits bords 54 du chariot comportent une première encoche 55 pour le positionnement de la branche latérale arrière 38 du profilé et une seconde encoche 56 pour le positionnement de la branche latérale avant 40 du profilé.

Le chariot 52 comporte sur sa face externe, dirigée vers l'extérieur du véhicule, un axe horizontal 42 qui débouche dans un orifice 43 prévu dans une paroi latérale 44 du premier pignon 24, comme représenté à la figure 5.

Le premier axe 42, du premier pignon 24 et le deuxième axe 47 du deuxième pignon 30 sont sensiblement parallèles.

Le chariot 52 comporte sur sa face interne, dirigée vers l'intérieur du véhicule, deux manchons 58, 60. Le premier manchon 58 est propre à recevoir une bague 62 (figure 6) de maintien du deuxième axe 47. Le deuxième manchon 60 est destiné à coopérer avec des moyens de support et de blocage du plateau 10, qui seront décrits ultérieurement.

La bague 62 de maintien comporte un corps cylindrique autour duquel est enroulé un ressort 63 maintenu du côté du deuxième pignon 30 par un ergot 64 et du côté de la barre 33 de synchronisation par une butée 65 conique.

Le premier pignon 24 est associé à des moyens 70 d'assistance de son déplacement sur la première crémaillère 26.

Les moyens 70 d'assistance comprennent, comme illustré sur la figure 5, un ressort 72 à spirales logé dans le premier pignon 24, dont l'extrémité distale 73 est reliée au premier pignon 24 et dont l'extrémité proximale 74 est reliée au chariot 52 par l'intermédiaire du premier axe 42. Ce ressort 72 à spirales est de préférence à raideur constante et est sensiblement continuellement précontraint, sa précontrainte étant maximale lorsque le premier pignon 24 est positionné dans la partie inférieure de la première crémaillère 26.

Le coffre comporte des moyens 80 de blocage du plateau 10 dans l'une des trois positions horizontales.

Les moyens 80 de blocage représentés plus particulièrement à la figure 7, comprennent, sur chaque bord latéral 11 du plateau, un doigt 82 porté par le plateau 10 et traversant les moyens 50 de guidage. Le doigt 82 droit est relié au doigt 82 gauche par la traverse 14.

Chaque doigt 82 est, plus précisément, porté par un orifice, non représenté, ménagé dans le dispositif 87.

Chaque doigt 82 est déplaçable par des moyens 84 de commande entre une position escamotée pour le déplacement du plateau 10 entre les trois positions horizontales et une position de verrouillage du plateau 10 dans l'une de ces trois positions horizontales.

Chaque doigt 82 traverse le deuxième manchon 60 du chariot 52 et débouche en regard de l'âme 36 du profilé 34 correspondant. Le doigt 82 est de diamètre extérieur inférieur au diamètre intérieur du deuxième manchon 60, ce qui permet au doigt 82 de coulisser avec jeu à travers le deuxième manchon 60. Ce jeu est compatible avec les torsions de la caisse du véhicule.

Chaque âme 36 est percée d'orifices 86 (figure 3) répartis à différentes hauteurs sur la longueur du profilé 34. Chaque orifice 86 correspond à une position surélevée du plateau 10 par rapport au plancher 3 du coffre du véhicule automobile.

Dans l'exemple de réalisation des figures 3 et 4, trois orifices 86 sont prévus. Plusieurs autres orifices 86 peuvent être également prévus sur l'âme 36 du profilé 34 afin d'offrir d'autres positions intermédiaires. De même, le profilé 34 peut être prévu plus long afin de permettre une plus grande échelle de déploiement jusqu'à potentiellement permettre au plateau 10 de former une tablette arrière pour le coffre, et non plus seulement un faux plancher.

Dans chacune des positions correspondant à un orifice 86, l'extrémité libre de chaque doigt 82 pénètre dans l'orifice 86 correspondant de façon à verrouiller le plateau 10 dans la position choisie.

Les moyens 84 de commande, visibles sur la figure 4, comportent la poignée 17 permettant la préhension du plateau 10 et la gâche 18 d'actionnement. Dans l'exemple des figures 2 et 3, la gâche 18 d'actionnement est ménagée dans le corps de la poignée 17.

Les moyens 84 de commande comportent, pour chaque bord latéral 11 du plateau, un dispositif 87 de maintien du doigt 82 en position de verrouillage du plateau 10 dans un orifice 86 correspondant. Chaque dispositif 87 de maintien du doigt comprend, par exemple, un ressort de compression, non représenté, disposé sur chaque doigt 82 et interposé entre un épaulement ménagé sur le doigt 82 et une butée prévue dans le dispositif 87 de maintien.

La gâche 18 d'actionnement est reliée à un câble principal 88 disposé sensiblement longitudinalement à l'intérieur du plateau 10, lui-même relié avec le dispositif 87 de maintien du doigt 82 droit par un câble secondaire 90 droit, et avec le dispositif 87 de maintien du doigt 82 gauche par un câble secondaire 90 gauche.

D'autres systèmes de commande du déplacement des doigts 82 peuvent être prévus, comme par exemple des électro-aimants commandés par commutateur présent sur ou sous la poignée 17, ou tout autre système approprié de type connu.

Le plateau 10 comporte des volets amovibles 92, visibles sur la figure 6, de maintien de chaque doigt 82 en position escamotée, propres à faciliter l'assemblage du plateau 10 et des moyens 80 de blocage.

Chaque volet amovible 92 est propre à coulisser sensiblement longitudinalement dans deux glissières 94 agencées sur le bord latéral correspondant de la traverse 14, entre une position d'escamotage du doigt 82 et une position de libération du doigt 82.

Une butée 96 est agencée sur chaque volet amovible 92 du côté opposé au doigt 82. La butée 96 est, par exemple, venue de matière avec le volet amovible 92. Chaque butée 96 est destinée à entraîner le coulissement du volet amovible 92 correspondant, de sa position d'escamotage du doigt 82 vers sa position de libération du doigt 82, par contact de la butée 96 contre le deuxième manchon 60, comme représenté sur les figures 7 et 8.

Les moyens 80 de blocage du plateau sont disposés à proximité de la partie avant de chaque bord latéral 11 du plateau.

Le coffre comporte des éléments 100 (figures 2 et 4) de maintien de la partie médiane de chaque bord latéral 11 du plateau 10 dans chacune des trois positions horizontales. Les éléments 100 de maintien comprennent, pour chaque bord latéral 11 du plateau, un premier élément 102 fixé au bord latéral 11 correspondant du plateau et un deuxième élément 104 fixé à la paroi latérale 6 du coffre en regard dudit bord latéral 11.

Le premier élément 102 est en forme d'une butée présentant une ouverture 106 de forme conique et orientée vers le bas. Chaque deuxième élément 104 est en forme d'une protubérance orientée vers le haut et de forme conique. Chaque protubérance 104 est propre à s'enclencher de manière élastique dans l'ouverture 106 de la butée 102 correspondante.

La butée 102 et la protubérance 104, étant de forme conique, sont propres à permettre un centrage automatique de l'une par rapport à l'autre. La butée 102 est réalisée en un matériau élastique, de préférence en élastomère, ou en tout autre matériau élastique.

Dans l'exemple de la figure 4, chaque paroi latérale 6 du coffre comporte trois protubérances 104.

Chaque butée 102 dépasse latéralement du bord latéral 11 correspondant, afin de s'enclencher avec la protubérance 104 correspondante. Une portion en creux 108 est prévue dans chaque paroi latérale 6 du coffre et est destinée à permettre le passage des butées 102 dans toutes les orientations du plateau 10.

Les protubérances 104 sont décalées du bas vers le haut vers l'arrière du véhicule du fait de l'inclinaison des profilés 34 du bas vers le haut vers l'arrière du véhicule, de telle sorte que le plateau 10 lors de son déplacement vers le haut se décale légèrement également vers l'arrière du véhicule.

Le coffre comporte des éléments 110 de support de la partie arrière de chaque bord latéral 11 du plateau 10 dans chacune des trois positions horizontales.

Dans l'exemple de la figure 4, les éléments 110 de support comprennent trois pattes 112 de support agencées sur chaque paroi latéral 6 du coffre et réparties aux différentes hauteurs correspondant aux trois positions horizontales.

Les pattes 112 de support sont décalées du bas vers le haut vers l'arrière du véhicule du fait de l'inclinaison des profilés 34 du bas vers le haut vers l'arrière du véhicule, de telle sorte que le plateau 10 lors de son déplacement vers le haut se décale légèrement également vers l'arrière du véhicule.

Une rainure 114 sensiblement horizontale est ménagée dans chaque paroi latérale 6, légèrement au-dessus de la protubérance 104 supérieure et de la patte 112 supérieure. Les rainures 114 sont à recevoir les bords latéraux 11 du plateau lors de l'assemblage initial du plateau 10 avec les moyens 20 de translation.

Les doigts 82 en position de verrouillage dans des orifices 86 correspondants et reliés entre eux par la traverse 14 forment une articulation du plateau 10 entre chaque position horizontale et une position sensiblement verticale.

La barre 33 de synchronisation est reliée à la traverse 14 du plateau 10 par des attaches 115, visibles sur les figures 6 à 8. Les attaches 115 présentent une gorge intérieure 117 de passage de la barre 33 de synchronisation. La gorge intérieure 117 est en forme d'un arc de cercle centré sur chaque doigt 82, propre à permettre une rotation angulaire du plateau 10 autour des doigts 82 tout en étant reliée à la barre 33 de synchronisation.

La gorge intérieure 117 de l'attache 115 présente un bossage 119 de maintien initial de la barre 33 de synchronisation dans sa position d'accostage avec chaque deuxième axe 47 du deuxième pignon 30.

Chaque paroi latérale 6 comporte des éléments amovibles, non représentés, de retenue du plateau 10 en position sensiblement verticale.

Les moyens 20 de translation et les moyens 51 de guidage sont dissimulés par une garniture 120, visible sur la figure 2, dans laquelle est ménagée une fente 122 pour le passage des manchons 58, 60.

Lors du montage initial du plateau 10 dans le coffre 2, l'opérateur glisse le plateau 10 dans la rainure 114 horizontale de chaque paroi latérale 6 du coffre. Les moyens 20 de translation et les moyens 51 de guidage sont placés dans leur position haute pour le montage initial. La rainure 48 de chaque deuxième axe 47 est, en particulier, orientée sensiblement horizontalement et vers l'arrière, de manière à recevoir le goujon 49 correspondant de la barre de synchronisation maintenue dans la position adéquate pour le montage initial par les ergots fusibles 50.

Une fois le plateau 10 inséré dans les rainures 114 des parois latérales 6, l'opérateur est déchargé du poids du plateau et lui suffit de pousser le plateau 10 vers l'avant du véhicule. La mise en place du plateau dans sa position d'enclenchement final avec les moyens 20 de translation et les moyens 51 de guidage est facilitée de par la mise en position initiale de chaque goujon 49 orienté vers la rainure 48.

En fin de course horizontale du plateau 10 dans les rainures 114, chaque butée 96 entre en contact avec le deuxième manchon 60 correspondant, ce qui a pour effet de libérer chaque doigt 82 dans le deuxième manchon 60, la barre synchrone s'emboîtant en même temps dans le deuxième axe 47 du deuxième pignon 30. L'opérateur effectue alors une rotation du plateau 10 autour de son articulation, ce qui a pour effet de casser les ergots fusibles 50, assurant ainsi le verrouillage de la barre 33 de synchronisation avec les deuxièmes pignons 30.

Après montage initial, le plateau 10 est indémontable.

Pour déplacer le plateau 10 en rotation autour de son articulation, il suffit à un utilisateur d'effectuer une traction sur la poignée 17, ce qui a pour effet d'obliger le plateau 10 à imprimer une rotation des doigts 82 dans les deuxièmes manchons 60 des chariots 52. La rotation du plateau 10 autour de son articulation permet d'accéder sous le plateau 10 pour, par exemple, récupérer une roue de secours.

Pour déverrouiller le plateau 10, l'utilisateur doit, en plus de la préhension de la poignée 17, activer la gâche 18 d'actionnement, afin de déplacer les doigts 82 vers l'intérieur du véhicule par l'intermédiaire du câble principal 88 et des câbles secondaires 90. L'extrémité libre de chacun des doigts 82 sort ainsi de l'orifice 86 correspondant dans lequel elle était engagée. Le plateau 10 est alors déverrouillé de sa position horizontale.

Pour déplacer le plateau 10 en translation vers le haut, l'utilisateur soulève la partie arrière de ce plateau 10 après avoir déverrouillé les doigts 82 et exerce une faible traction vers le haut de façon à entraîner en rotation chaque premier pignon 24 qui se déplace sur la première crémaillère 26 correspondante.

Les ressorts 72 à spirales, du fait de leur précontrainte, aident à la rotation de chaque premier pignon 24, ce qui facilite la montée du plateau 10 pour l'utilisateur qui ne ressent pas la masse réelle de ce plateau 10. Au cours de cette montée, l'utilisateur relâche la gâche 18 d'actionnement de l'organe 84 de commande, si bien que sous l'effet de chaque ressort de compression du dispositif 87 de maintien, chaque doigt 82 se repositionne automatiquement contre l'âme 36 du profilé 34. En continuant à monter le plateau 10 à l'aide la poignée 17, l'utilisateur peut déterminer lorsque la hauteur correspond à une position verrouillable par le cliquetis généré lorsque chaque doigt 82 se détend dans l'orifice 86 qui lui fait face.

Lors de la translation du plateau 10, la vitesse angulaire du premier pignon 24 gauche est identique à la vitesse angulaire du premier pignon 24 droit, de par l'engrènement de chaque deuxième pignon 30 sur la deuxième crémaillère 32, les pignons 30 étant synchronisés angulairement entre eux, par l'intermédiaire de la barre 33 de synchronisation.

Ensuite, l'utilisateur repose la partie arrière du plateau 10 sur les pattes 112 de supports correspondants, ce qui a également pour effet d'entraîner l'enclenchement élastique des protubérances 104 dans chaque butée 102 correspondante afin de maintenir le plateau 10 de manière élastique dans sa partie médiane.

Le coffre 2 se trouve ainsi divisé en deux compartiments distincts. Le plateau 10 peut être déplacé suivant différentes positions de façon à permettre à l'utilisateur de modifier le volume de chaque compartiment en fonction des charges ou des objets qu'il doit transporter, tout en ayant toujours la possibilité de pivoter le plateau 10 pour faciliter l'extraction l'objets disposés en dessous.

Lorsque l'utilisateur désire descendre le plateau 10, il procède de la même manière en soulevant légèrement la partie arrière de ce plateau 10, en activant la gâche 18 d'actionnement et en exerçant une poussée vers le bas. Etant donné que chaque ressort 72 à spirales est toujours précontraint, l'assistance réalisée par chacun de ces ressorts 72 s'effectue également lors de la descente du plateau 10 qui s'en trouve facilitée.

La barre 33 de synchronisation selon l'invention permet un déplacement du plateau 10 sans écart angulaire entre les moyens de translation gauche et droit, ce qui assure une translation du plateau 10 sans inclinaison latérale de celui-ci. L'effort de manipulation nécessaire est ainsi constant et onctueux et le plateau 10 est manoeuvrable facilement d'une seule main.

Au niveau le plus bas, le plateau 10 s'appuie sur le plancher 3 du véhicule pour garantir le volume le plus grand et la charge maximale. Au niveau intermédiaire, avec les sièges rabattus, le plateau 10 assure la continuité d'un plancher plat de l'arrière du véhicule jusqu'au dos des sièges avants.

L'autocentrage et l'enclenchement élastique des éléments 100 de maintien de la partie médiane de chaque bord latéral 11 du plateau, combiné au jeu prévu entre chaque doigt 82 et le deuxième manchon 60 correspondant, permet un traitement vibratoire optimal du plateau 10 et une atténuation des dispersions de la caisse du véhicule.

La ligne 19 de pliage permet, en cas de choc arrière, au plateau 10 de se plier le long de cette ligne de pliage, ce qui a pour permet d'absorber une partie de l'énergie du choc arrière. La traverse 14 située à l'avant du plateau 10 est maintenue par les moyens de blocage et n'entre pas en contact avec le dos des sièges arrières de par le pliage vers le haut du plateau 10.

On conçoit ainsi que l'agencement selon l'invention permet de réduire l'inclinaison latérale du plateau lors de sa translation entre deux positions horizontales, afin de faciliter le maniement du plateau.

L'agencement selon l'invention permet un déplacement horizontal du plateau, tout en permettant de pouvoir absorber les écarts angulaires dus au déplacement du véhicule.

Enfin, le mouvement du plateau entre les différentes positions est inscrit dans le volume disponible du coffre du véhicule.

## Revendications

1. Agencement d'un coffre (2) pour véhicule automobile, ledit coffre (2) étant délimité par un plancher (3), deux parois latérales (6) et une cloison (4) de séparation avec l'habitacle (5), et comprenant un plateau (10) formant un faux plancher, associé à des moyens (20) de translation du plateau entre plusieurs positions sensiblement horizontales, variables en hauteur pour fractionner le coffre (2) en deux compartiments de chargement séparés, lesdits moyens (20) de translation comprenant, sur chaque bord latéral (11) du plateau (10), un premier dispositif (22) comportant un premier pignon (24) engagé dans une première crémaillère (26), **caractérisé en ce que** les moyens (20) de translation comprennent, sur chaque bord latéral (11) du plateau (10), un deuxième dispositif (28) comportant un deuxième pignon (30) engagé dans une deuxième crémaillère (32), l'axe (47) du deuxième pignon (30) étant sensiblement parallèle à l'axe (42) du premier pignon (24), et **en ce que** le deuxième pignon (30) d'un bord latéral est maintenu solidairement en rotation avec le deuxième pignon (30) de l'autre bord latéral par une barre (33) de synchronisation.

2. Agencement selon la revendication 1, **caractérisé en ce qu'**il comporte des moyens de guidage (50) et de blocage (80) du plateau (10) dans l'une des positions horizontales.

3. Agencement selon la revendication 2, **caractérisé en ce que** les moyens (80) de blocage sont agencés sur chaque bord latéral (11) du plateau (10), et **en ce que** les moyens (80) de blocage d'un bord latéral (11) sont reliés aux moyens de blocage (80) de l'autre bord latéral (11) par une traverse (14).

4. Agencement selon l'une quelconque des revendications précédentes, **caractérisé en ce qu'**il comporte des éléments (100) de maintien de la partie médiane de chaque bord latéral (11) du plateau (10) dans chacune desdites positions horizontales.

5. Agencement selon la revendication 4, **caractérisé en ce que** lesdits éléments (100) de maintien sont réalisés en un matériau élastique, de préférence en élastomère.

6. Agencement selon la revendication 4 ou 5, **caractérisé en ce que** lesdits éléments (100) de maintien comprennent, pour chaque bord latéral (11) du plateau (10), un premier élément (102) fixé au bord latéral (11) correspondant du plateau (10) et un deuxième élément (104) fixé à la paroi latérale (6) du coffre (2) en regard dudit bord latéral (11) correspondant, le premier élément (102) et le deuxième élément (104) étant propres à permettre un centrage automatique de l'un par rapport à l'autre.

7. Agencement selon l'une quelconque des revendications précédentes, **caractérisé en ce qu'**il comporte des éléments (110) de support de la partie arrière de chaque bord latéral (11) du plateau (10) dans chacune desdites positions horizontales.

8. Agencement selon l'une quelconque des revendications précédentes, **caractérisé en ce qu'**il comporte une articulation (14, 82) du plateau (10) entre chaque position horizontale et une position sensiblement verticale.

9. Agencement selon la revendication 8, **caractérisé en ce qu'**il comporte des éléments amovibles de retenue du plateau (10) en position sensiblement verticale.

10. Agencement selon l'une quelconque des revendications précédentes, **caractérisé en ce que** la première crémaillère (26) de chaque premier dispositif (22) est ménagée sur la face interne d'une branche latérale (38) d'un profilé (34) desdits moyens (20) de translation, en forme de "U" dont l'ouverture est dirigée vers l'intérieur du véhicule, et **en ce que** la deuxième crémaillère (32) de chaque deuxième dispositif (28) est ménagée sur la face interne de l'autre branche latérale (40) du profilé (34).

11. Agencement selon l'une quelconque des revendications 2 à 10, **caractérisé en ce que** les moyens (50) de guidage du plateau (10) comprennent, sur chaque bord latéral (11) du plateau (10), un chariot (52) déplaçable par coulissement du premier pignon (24) sur le profilé (34) correspondant, ledit chariot (52) étant solidaire en translation du plateau (10) par l'intermédiaire des moyens (80) de blocage et de la barre (33) de synchronisation.

12. Agencement selon la revendication 11, **caractérisé en ce qu'**une extrémité de l'axe (42) du premier pignon (24) est solidaire du chariot (52), et **en ce que** l'autre extrémité de l'axe (42) du premier pignon (24) débouche dans un orifice (43) prévu dans une paroi latérale (44) dudit premier pignon (24).

13. Agencement selon l'une quelconque des revendications précédentes, **caractérisé en ce qu'**il comporte des moyens (70) d'assistance du déplacement du premier pignon (24) sur la première crémaillère (26) vers le haut et vers le bas.

14. Agencement selon les revendications 2 et 13, **caractérisé en ce que** les moyens (70) d'assistance du déplacement du premier pignon (24) comprennent un ressort (72) à spirales précontraint et de raideur constante, logé dans le premier pignon (24), l'extrémité distale (73) du ressort (72) étant reliée au premier pignon (24) et l'extrémité proximale (74) étant reliée aux moyens (51) de guidage.

15. Agencement selon l'une quelconque des revendications 2 à 14, prise avec la revendication 9, **caractérisé en ce que** les moyens (80) de blocage du plateau (10) comprennent, sur chaque bord latéral (11) du plateau (10), un doigt (82) porté par le plateau (10) et traversant les moyens (50) de guidage par un manchon (60), ledit doigt (82) étant déplaçable par des moyens (84) de commande entre une position escamotée pour le déplacement du plateau (10) entre lesdites positions horizontales, et une position de verrouillage du plateau (10) dans l'une de ces positions horizontales, dans lesquelles il coopère avec un orifice (86) ménagé dans l'âme (36) du profilé correspondant.

16. Agencement selon la revendication 15, **caractérisé en ce que** le plateau (10) comporte un volet amovible (92) de maintien de chaque doigt (82) en position escamotée, propre à faciliter l'assemblage du plateau (10) et des moyens (80) de blocage.

17. Agencement selon l'une quelconque des revendications 2 à 16, **caractérisé en ce que** les moyens (80) de blocage du plateau sont disposés à proximité de la partie avant de chaque bord latéral (11) du plateau.

18. Agencement selon la revendication 17, **caractérisé en ce que** le plateau (10) comporte une ligne (19) de pliage s'étendant sensiblement transversalement dans la partie médiane du plateau (10), et propre à permettre une absorption d'énergie par le plateau (10) en cas de choc arrière, le plateau (10) étant maintenu en partie avant par les moyens (80) de blocage et étant destiné à se plier le long de ladite ligne (19) de pliage.

19. Agencement selon l'une quelconque des revendications précédentes, **caractérisé en ce qu'**il comporte des moyens fusibles (49C) de maintien de la barre (33) de synchronisation en position angulaire autour de son axe, propres à faciliter l'assemblage de la barre (33) de synchronisation avec chaque deuxième pignon (30).

20. Agencement selon l'une quelconque des revendications précédentes **caractérisé en ce qu'**un jeu compatible avec le déplacement du plateau (10) est ménagé, d'une part, entre le doigt (82) et le manchon (60) et, d'autre part, entre l'excroissance (49A) du goujon (49) et la rainure (48).

21. Véhicule automobile, **caractérisé en ce qu'**il comporte un agencement de coffre (2) selon l'une quelconque des revendications précédentes.

## Claims

1. A boot arrangement (2) for a motor vehicle, said boot (2) being delimited by a floor (3), two side walls (6) and a partition (4) separating it from the passenger cab (5), and comprising a plate (10) forming a false floor, associated with means (20) for translating the plate between several substantially horizontal positions, with variable heights to divide the boot (2) into two separate loading compartments, said translation means (20) comprising, on each side edge (11) of the plate (10), a first device (22) including a first pinion (24) engaged in a first rack (26), **characterized in that** the translation means (20) comprise, on each side edge (11) of the plate (10), a second device (28) including a second pinion (30) engaged in a second rack (32), the axis (47) of the second pinion (30) being substantially parallel to the axis (42) of the first pinion (24), and **in that** the second pinion (30) of a side edge is kept integrally in rotation with the second pinion (30) of the other side edge by a synchronization bar (33).

2. The arrangement according to claim 1, **characterized in that** it includes guide (50) and blocking (80) means for the plate (10) in one of the horizontal positions.

3. The arrangement according to claim 2, **characterized in that** the blocking means (80) are arranged on each side edge (11) of the plate (10), and **in that** the means (80) for blocking a side edge (11) are connected to the blocking means (80) of the other side edge (11) by a cross-piece (14).

4. The arrangement according to any one of the preceding claims, **characterized in that** it includes elements (100) for maintaining the middle portion of each side edge (11) of the plate (10) in each of said horizontal positions.

5. The arrangement according to claim 4, **characterized in that** said maintaining elements (100) are made from an elastic material, preferably elastomer.

6. The arrangement according to claim 4 or 5, **characterized in that** said maintaining elements (100) comprise, for each side edge (11) of the plate (10), a first element (102) fixed to the corresponding side edge (11) of the plate (10) and a second element (104) fixed to the side wall (6) of the boot (2) opposite said corresponding side edge (11), the first element (102) and the second element (104) being able to allow automatic centering of one relative to the other.

7. The arrangement according to any one of the preceding claims, **characterized in that** it includes support elements (110) for the rear portion of each side edge (11) of the plate (10) in each of said horizontal positions.

8. The arrangement according to any one of the preceding claims, **characterized in that** it includes a hinge (14, 82) of the plate (10) between each horizontal position and a substantially vertical position.

9. The arrangement according to claim 8, **characterized in that** it includes removable retaining elements for the retaining the plate (10) in a substantially vertical position.

10. The arrangement according to any one of the preceding claims, **characterized in that** the first rack (26) of each first device (22) is formed on the inner surface of a side branch (38) of a profile (34) of said translation means (20), in the shape of a U whereof the opening is oriented toward the inside of the vehicle, and **in that** the second rack (32) of each second device (28) is formed on the inner surface of the other side branch (40) of the profile (34).

11. The arrangement according to any one of claims 2 to 10, **characterized in that** the means (50) for guiding the plate (10) comprise, on each side edge (11) of the plate (10), a wagon (52) movable by sliding the first pinion (24) on the corresponding profile (34), said wagon (52) being translationally integral with the plate (10) via blocking means (80) and the synchronization bar (33).

12. The arrangement according to claim 11, **characterized in that** one end of the axis (42) of the first pinion (24) is secured to the wagon (52), and **in that** the other end of the axis (42) of the first pinion (24) emerges in an orifice (43) provided in a side wall (44) of the first pinion (24).

13. The arrangement according to any one of the preceding claims, **characterized in that** it includes means (70) for assisting with the movement of the first pinion (24) on the first rack (26) upward and downward.

14. The arrangement according to claims 2 and 13, **characterized in that** the means (70) for assisting with the movement of the first pinion (24) comprise a pre-stressed spiral spring (72) with a constant stiffness, housed in the first pinion (24), the distal end (73) of the spring (72) being connected to the first pinion (24) and the proximal end (74) being connected to the guide means (51).

15. The arrangement according to any one of claims 2 to 14, taken together with claim 9, **characterized in that** the means (80) for blocking the plate (10) comprise, on each side edge (11) of the plate (10), a finger (82) supported by the plate (10) and passing through the guide means (50) by a sleeve (60), said finger (82) being movable by control means (84) between a retracted position to move the plate (10) between said horizontal positions, and a position for locking the plate (10) in one of said horizontal positions, in which it cooperates with an orifice (86) formed in the core (36) of the corresponding profile.

16. The arrangement according to claim 15, **characterized in that** the plate (10) includes a removable flap (92) for keeping each finger (82) in the retracted position, able to facilitate the assembly of the plate (10) and blocking means (80).

17. The arrangement according to any one of claims 2 to 16, **characterized in that** the blocking means (80) of the plate are arranged near the front portion of each side edge (11) of the plate.

18. The arrangement according to claim 17, **characterized in that** the plate (10) includes a folding line (19) extending substantially transversely in the middle portion of the plate (10), and able to allow an absorption of energy by the plate (10) in case of rear impact, the plate (10) being kept in the front portion by the blocking means (80) and being intended to fold along said folding line (19).

19. The arrangement according to any one of the preceding claims, **characterized in that** it includes fusible means (49C) for keeping the synchronization bar (33) in angular position around its axis, able to facilitate the assembly of the synchronization bar (33) with each second pinion (30).

20. The arrangement according to any one of the preceding claims, **characterized in that** a play compatible with the movement of the plate (10) is formed, on the one hand, between the finger (82) and the sleeve (60) and, on the other hand, between the protuberance (49A) of the stud (49) and the groove (48).

21. A motor vehicle, **characterized in that** it includes a boot arrangement (2) according to any one of the preceding claims.

## Patentansprüche

1. Einrichtung für einen Kofferraum (2) eines Kraftfahrzeugs, wobei der Kofferraum (2) von einem Boden (3), zwei Seitenwänden (6) und einer Trennwand (4) vom Fahrgastraum (5) begrenzt ist und eine Platte (10) umfasst, die einen Blindboden bildet, kombiniert mit Verschiebemitteln (20) der Platte zwischen mehreren etwa horizontalen in der Höhe variablen Stellungen, um den Kofferraum (2) in zwei getrennte Ladeabteile zu unterteilen, wobei die Verschiebemittel (20) auf jeder Seitenkante (11) der Platte (10) eine erste Vorrichtung (22) umfassen, die eine erstes Zahnrad (24) aufweisen, das in eine erste Zahnstange (26) eingreift, **dadurch gekennzeichnet, dass** die Verschiebemittel (20) auf jeder Seitenkante (11) der Platte (10) eine zweite Vorrichtung (28) umfassen, die ein zweites Zahnrad (30) aufweist, das in eine zweite Zahnstange (32) eingreift, wobei die Achse (47) des zweiten Zahnrads (30) etwa parallel zur Achse (42) des ersten Zahnrads (24) ist, und dass das zweite Zahnrad (30) einer Seitenkante mit dem zweiten Zahnrad (30) der anderen Seitenkante von einer Synchronisationsstange (33) gemeinsam in Rotation gehalten wird.

2. Einrichtung nach Anspruch 1, **dadurch gekennzeichnet, dass** sie Führungs- (50) und Blockiermittel (80) der Platte (10) in einer der horizontalen Stellungen aufweist.

3. Einrichtung nach Anspruch 2, **dadurch gekennzeichnet, dass** die Blockiermittel (80) auf jeder Seitenkante (11) der Platte (10) ausgebildet sind, und dass die Blockiermittel (80) einer Seitenkante (11) mit den Blockiermitteln (80) der anderen Seitenkante (11) durch eine Querstrebe (14) verbunden sind.

4. Einrichtung nach einem der vorangehenden Ansprüche, **dadurch gekennzeichnet, dass** sie Halteelemente (100) des Mitteilteils jeder Seitenkante (11) der Platte (10) in jeder der horizontalen Stellungen aufweist.

5. Einrichtung nach Anspruch 4, **dadurch gekennzeichnet, dass** die Halteelemente (100) aus einem elastischen Material, vorzugsweise aus Elastomer, hergestellt sind.

6. Einrichtung nach Anspruch 4 oder 5, **dadurch gekennzeichnet, dass** die Halteelemente (100) für jede Seitenkante (11) der Platte (10) ein erstes Element (102) umfassen, das an der entsprechenden Seitenkante (11) der Platte (10) befestigt ist, und ein zweites Element (104), das an der Seitenwand (6) des Kofferraums (2) gegenüber der entsprechenden Seitenkante (11) befestigt ist, wobei das erste Element (102) und das zweite Element (104) imstande sind, eine automatische Zentrierung im Verhältnis zueinander zu erlauben.

7. Einrichtung nach einem der vorangehenden Ansprüche, **dadurch gekennzeichnet, dass** sie Stützelemente (110) des hinteren Teils jeder Seitenkante (11) der Platte (10) in jeder der horizontalen Stellungen aufweist.

8. Einrichtung nach einem der vorangehenden Ansprüche, **dadurch gekennzeichnet, dass** sie ein Gelenk (14, 82) der Platte (10) zwischen jeder horizontalen Stellung und einer etwa vertikalen Stellung aufweist.

9. Einrichtung nach Anspruch 8, **dadurch gekennzeichnet, dass** sie lösbare Rückhalteelemente der Platte (10) in etwa vertikaler Stellung aufweist.

10. Einrichtung nach einem der vorangehenden Ansprüche, **dadurch gekennzeichnet, dass** die erste Zahnstange (26) jeder ersten Vorrichtung (22) auf der Innenseite eines Seitenarms (38) eines Profils (34) der Verschiebemittel (20) in U-Form ausgebildet ist, dessen Öffnung in Richtung Fahrzeuginnenraum zeigt und dass die zweite Zahnstange (32) jeder zweiten Vorrichtung (28) auf der Innenseite des anderen Seitenarms (40) des Profils (34) ausgebildet ist.

11. Einrichtung nach einem der Ansprüche 2 bis 10, **dadurch gekennzeichnet, dass** die Führungsmittel (50) der Platte (10) auf jeder Seitenkante (11) der Platte (10) einen durch Verschieben des ersten Zahnrads (24) auf dem entsprechenden Profil (34) verschiebbaren Schlitten (52) umfassen, wobei der Schlitten (52) mit der Platte (10) über die Blockiermittel (80) und die Synchronisationsstange (33) verschiebbar verbunden ist.

12. Einrichtung nach Anspruch 11, **dadurch gekennzeichnet, dass** ein erstes Ende der Achse (42) des ersten Zahnrads (24) mit dem Schlitten (52) verbunden ist und dass das andere Ende der Achse (42) des ersten Zahnrad (24) in eine Öffnung (43) mündet, die in eine Seitenwand (44) des ersten Zahnrads (24) eingearbeitet ist.

13. Einrichtung nach einem der vorangehenden Ansprüche, **dadurch gekennzeichnet, dass** sie Hilfsmittel (70) der Verschiebung des ersten Zahnrads (24) auf der ersten Zahnstange (26) nach oben und nach unten aufweist.

14. Einrichtung nach den Ansprüchen 2 und 13, **dadurch gekennzeichnet, dass** die Hilfsmittel (70) der Verschiebung des ersten Zahnrads (24) eine vorgespannte konstant steife Spiralfeder (72) umfassen, die im ersten Zahnrad (24) untergebracht ist, wobei das distale Ende (73) der Feder (72) mit dem ersten Zahnrad (24) verbunden ist und das proximale Ende (74) mit den Führungsmitteln (51) verbunden ist.

15. Einrichtung nach einem der Ansprüche 2 bis 14, in Verbindung mit Anspruch 9, **dadurch gekennzeichnet, dass** die Blockiermittel (80) der Platte (10) auf jeder Seitenkante (11) der Platte (10) einen Finger (82) umfassen, der von der Platte (10) getragen wird und die Führungsmittel (50) durch eine Hülse (60) durchquert, wobei der Finger (82) von den Steuermitteln (84) zwischen einer eingezogenen Stellung für die Verschiebung der Platte (10) zwischen den horizontalen Stellungen und einer Verriegelungsstellung der Platte (10) in einer dieser horizontalen Stellungen horizontales verschiebbar ist, in denen er mit einer Öffnung (86) zusammenarbeitet, die in den Steg (36) des entsprechenden Profils eingearbeitet ist.

16. Einrichtung nach Anspruch 15, **dadurch gekennzeichnet, dass** die Platte (10) ein lösbares Halteplättchen (92) jedes Fingers (82) in eingezogener Stellung aufweist, das imstande ist, die Montage der Platte (10) und der Blockiermittel (80) zu erleichtern.

17. Einrichtung nach einem der Ansprüche 2 bis 16, **dadurch gekennzeichnet, dass** die Blockiermittel (80) der Platte in der Nähe des vorderen Abschnitts jedes seitlichen Randes (11) der Platte angeordnet sind.

18. Einrichtung nach Anspruch 17, **dadurch gekennzeichnet, dass** die Platte (10) eine Faltlinie (19) umfasst, die sich etwa quer im Mittelteil der Platte (10) erstreckt und imstande ist, bei einem Aufprall hinten eine Energieabsorption durch die Platte (10) zu erlauben, wobei die Platte (10) im vorderen Abschnitt von den Blockiermitteln (80) gehalten wird und dazu bestimmt ist, sich entlang der Faltlinie (19) zu falten.

19. Einrichtung nach einem der vorangehenden Ansprüche, **dadurch gekennzeichnet, dass** sie Sicherungsmittel (49C) aufweist, die die Synchronisationsstange (33) in Winkelstellung um ihre Achse halten, die imstande sind, die Montage der Synchronisationsstange (33) mit jedem zweiten Zahnrad (30) zu erleichtern.

20. Einrichtung nach einem der vorangehenden Ansprüche, **dadurch gekennzeichnet, dass** ein mit der Verschiebung der Platte (10) kompatibles Spiel einerseits zwischen dem Finger (82) und der Hülse (60) und andererseits zwischen der Ausstülpung (49A) des Bolzens (49) und der Rille (48) ausgebildet ist.

21. Kraftfahrzeug, **dadurch gekennzeichnet, dass** es eine Einrichtung für einen Kofferraum (2) nach einem der vorangehenden Ansprüche aufweist.
